# EUROPEAN PATENT SPECIFICATION

(11) **EP 2 589 191 B1**
(45) Date of publication and mention of the grant of the patent: **06.01.2016**
(21) Application number: 10773731.4
(22) Date of filing: 30.06.2010
(51) Int. Cl.: H04L 25/02, H04L 5/00

(54) **METHOD FOR CHANNEL ESTIMATION USING CELL SPECIFIC REFERENCE SYMBOLS**
VERFAHREN UND VORRICHTUNG ZUR KANALSCHÄTZUNG IN ÜBERLAGERTEN ZELLEN MITTELS ZELLENSPEZIFISCHER REFERENZSYMBOLE
PROCÉDÉ ET DISPOSITIF D'ESTIMATION DU CANAL DANS DES CELLULES SUPERPOSÉES À L'AIDE DE SYMBOLES DE RÉFÉRENCE SPÉCIFIQUES DE CELLULE

(43) Date of publication of application: 08.05.2013
(73) Proprietor: Telefonaktiebolaget LM Ericsson (publ), 164 83 Stockholm (SE)
(72) Inventor: DIMOU, Konstantinos, S-113 41 Stockholm (SE); BALDEMAIR, Robert, S-171 70 Solna (SE); DAHLMAN, Erik, S-168 68 Bromma (SE)
(74) Representative: Ericsson
(86) International application number: PCT/SE2010/050753
(87) International publication number: WO 2012/002855

(56) References cited:
- US-A- 5 546 443
- US-A1- 2010 118 989

## Description

### Field of the invention

The present invention relates generally to the field of wireless communication and, in particular, to methods and arrangements for channel estimation in a user equipment of a wireless communication system.

### Background of the invention

LTE (Long-term evolution) is a project within the 3GPP (3rd Generation Partnership Project) with an aim to improve the UMTS (Universal Mobile Telecommunications System) mobile phone standard for coping with future technology evolutions.

Heterogeneous network (HetNet) is an item of interest in the development of LTE-Advanced. HetNets have for example been considered for complementing macro cell layouts in order to handle non-uniform traffic distributions. Macro cells could be used in certain areas primarily for coverage and smaller cells underlaid the macro cells could be used for high capacity needs at traffic hotspots.

In HetNets comprising a mixture of differently sized cells with overlapping coverage areas, e.g. a number of micro and pico cells overlaid by a macro cell, the cells have different characteristics. As an example, in terms of output power the micro cells typically communicate on considerably lower output power than the macro cell.

A conventional approach is to apply complete frequency separation between the different cells, or different layers, and operate the different layers on different nonoverlapping carrier frequencies, thereby avoiding any interference between the layers. With no macro cell interference towards the underlaid cells, advantages of the cell splitting are obtained since all resources can be used simultaneously by the underlaid cells. A drawback of this approach is that the resource utilization is not optimized. Another approach is to have the cells operating at least partly on same set of frequencies. Better utilization of network resources would follow, but inter-cell interference then has to be handled. Classical inter-cell interference coordination (ICIC) methods, such as frequency reuse or fractional frequency reuse, can generally be applied. However, although such ICIC methods are applicable for data transmissions, they cannot be used for all types of signal transmission. Synchronization signals (PSS/SSS), physical broadcast channel (PBCH), L1/L2 control channels (PDCCH, PCFICH, PHICH) and cell specific reference signals (CRS), are a few examples of signaling that need to be transmitted on specific, well-defined resources. Efficient interference handling is required also for this type of signaling.

CRSs for example, as explained for example in the patent application US 2010/118989 A1, are transmitted over the whole system bandwidth. ICIC could be applied in the time domain, i.e. transmitting the CRS at given time sub-frames only by the macro-cell, during which time the underlaid cells are muting their respective transmission of CRS. However, channel estimation would be difficult in the total absence of reference signals. Further, CRS would be interfering with physical downlink shared channel (PDSCH) and CRS heavily interfered by PDSCH would run the risk of obtaining faulty channel estimation.

From the above it is clear that interference management is an important issue in the development of LTE-Advanced. It would be desirable to provide reliable and effective interference handling methods for control signalling.

### Summary of the invention

One aspect of the present invention is directed towards arrangements and methods for interference management of control signalling in heterogeneous cell layouts, and in particular for inter-layer interference management for cell specific reference signals (CRSs).

More precisely, the present invention relates to a method, in a user equipment, for channel estimation according to independent claim 1. Additional details of the method are provided in dependent claims 2-9.

Furthermore, the invention relates to a user equipment as specified in independent claim 9 and further detailed in dependent claim 10.

Further features and advantages thereof will become clear upon reading the following detailed description and the accompanying drawings.

### Brief description of the drawings

The invention will now be described in more detail with reference to the enclosed drawings, in which:
Figure 1 illustrates a sub-frame for downlink transmissions in e.g. LTE systems.
Figure 2 illustrates a wireless communication network in which the present invention may be implemented.
Figure 3 illustrates sub-frames of a layered cell structure.
Figure 4 illustrates transmissions from cells of a layered cell structure.
Figure 5 illustrates a flow chart over steps included in a method in accordance wit the present invention.
Figure 6 illustrates a user equipment in accordance with the invention.
Figure 7 illustrates an embodiment of the invention.

### Detailed description of embodiments of the invention

In the following description, for purposes of explanation and not limitation, specific details are set forth such as particular architectures, interfaces, techniques, etc. in order to provide a thorough understanding of the invention. However, it will be apparent to those skilled in the art that the invention is defined and limited only by the scope of appended claims 1-10.

In other instances, detailed descriptions of well-known devices, circuits, and methods are omitted so as not to obscure the description of the invention with unnecessary details. In the following description, any reference(s) to embodiment(s) not falling within the scope of appended calims 1-10 is (are) to be interpreted as example(s) useful for the understanding of present invention.

In order to provide a thorough understanding of the present invention, some general concepts in wireless communication systems are briefly described initially in the following.

In OFDM systems, such as LTE systems, certain symbols in the time-frequency grid defined by the OFDM signal are designated as reference symbols. These reference symbols have a value that is known to the receiver of the OFDM signal and are used by the receiver as pilot symbols in order to characterize the propagation channel between the transmitter and receiver, and to estimate the noise and interference variation of the received signal. The channel estimates and noise-plus-interference estimates are used to calculate an estimated signal-to-interference ratio (SIR) for use in demodulation of the information symbols and thus decoding received communication signals. The protection of these pilot symbols from other cell interference is important. In LTE, such pilot symbols are called reference symbols and the sequences formed by several pilot symbols is called reference signal.

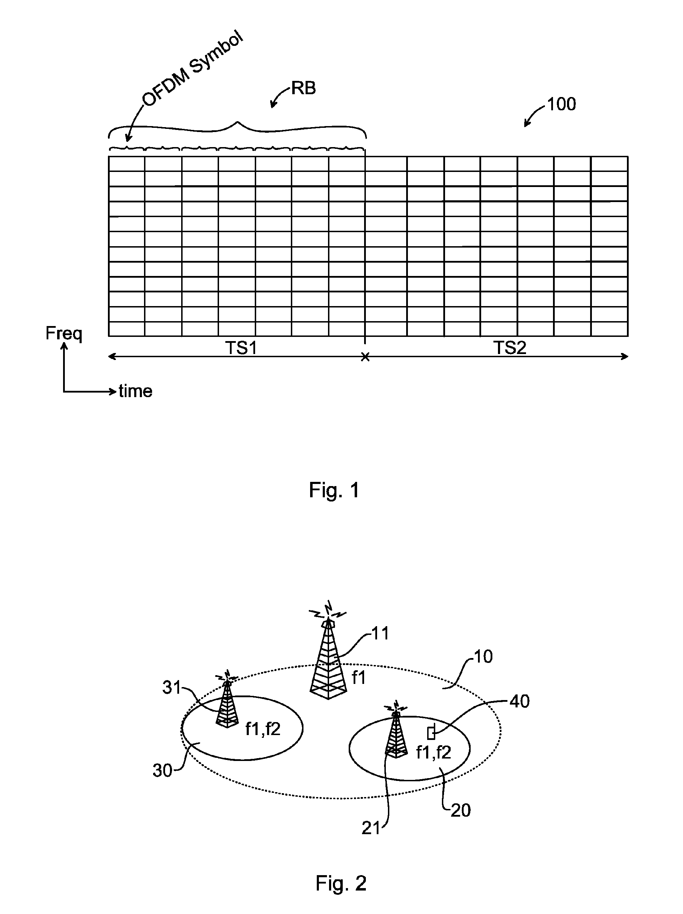

Figure 1 illustrates a sub-frame 100 for downlink transmissions in e.g. LTE systems. The sub-frame 100 comprises in time domain two slots TS1, TS2 and each time slot comprises seven OFDM symbols, assuming normal cyclic prefix. A resource block RB comprises in the frequency direction 12 sub-carriers and in the time direction seven OFDM symbols. An exemplary scheduling unit to a user equipment comprises 12 sub-carriers over one sub-frame, i.e. two resource blocks RBs. If a user needs more bandwidth multiples of 12 subcarriers can be scheduled for the user. Cells typically use different locations and pattern for the reference symbols, hence denoted cell-specific reference signals (CRS).

Figure 2 illustrates a layered cell structure in a wireless communication system 1 in which the present invention may be implemented. In particular, a cellular layout is shown having an overlaid cell 10, also denoted macro cell in the following, and a first and a second underlaid cell 20, 30, also denoted first and second pico cells, respectively, in the following. That is, the coverage areas of the pico cells 20, 30 lie within the coverage area of the macro cell 10.

The macro cell 10 comprises a base station 11 (denoted evolved Node B or eNB in LTE) transmitting, in the exemplifying case of figure 1, on carrier bandwidth f1. The first and second pico cells 20, 30 comprise a respective base station 21, 31, which are also transmitting on carrier bandwidth f1 and further on carrier bandwidth f2. The use of overlapping carrier bandwidths for the cells 10, 20, 30 is brought about by operators desire to maximize utilization of their available bandwidth. The macro cell 10 and the first and second pico cells 20, 30 thus have partly overlapping carrier bandwidths. As an example, a 20 MHz bandwidth segregated into two (10 MHz bandwidth) carrier bandwidths f1 and f2 could be used within the coverage area of the macro cell 10. Therein, the carrier bandwidth f1 is used by the macro cell 10, while the first and second pico cells 20, 30 use both f1 and f2.

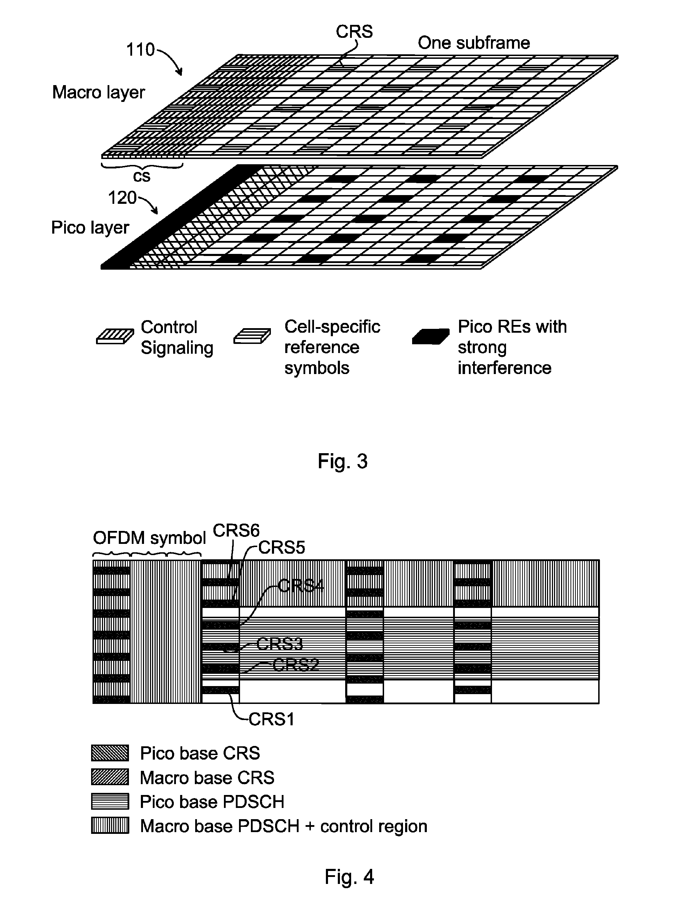

The interference scenario described in the background section is described in some more detail in the following, with reference to figures 3 and 4, giving a frame of reference for the invention.

It can be expected that CRSs transmitted in carrier f1 in the first and second pico cells 20, 30 are going to experience high interference, especially from CRSs and PDSCH transmitted in the overlaid macro cell 10.

Interference caused by CRSs transmissions from macro base station 11 towards pico base station 21 could be avoided by transmitting CRS only at given time sub-frames by the macro cell 10 while the pico cells 20, 30 simultaneously mute their respective transmission of CRSs. Alternatively, the transmission of CRS from pico cells 20, 30 could be shifted in frequency so as to not collide with CRS transmissions from the macro cell 10. In case of shifting the transmission of CRSs in time or frequency, a problem is that CRS are interfering with PDSCH, which is illustrated in figure 3. Figure 3 illustrates sub-frames of a layered cell structure and in particular the described interference situation between CRSs and PDSCH resource elements.

In the figure 3, a macro layer sub-frame and a pico layer sub-frame are illustrated. The three first OFDM symbols in the macro layer 110 are dedicated for control signaling, indicated at CS in the figure 3. Pico resource elements in the pico layer 120 that experience strong interference from the macro base station 11 are indicated by black squares. Squares in the macro layer 110 provided with horizontal lines, and one of which is denoted by CRS, are cell-specific reference symbols.

Figure 4 illustrates PDSCH and CRS transmissions from macro base station 11 and first pico base station 21. The control signaling region of the macro cell 10 is three OFDM symbols, as illustrated. The pico base station 21 PDSCH starts at the fourth OFDM symbol. Further, in figure 4, resource elements carrying cell specific reference symbols CRS1, CRS2, CRS3, CRS4, CRS5, CRS6 are illustrated.

Interference stemming from PDSCH transmission from macro base station received by the user equipment 40 connected to the pico base station 21 can be mitigated by suitable inter-cell interference coordination, e.g. by not scheduling macro and pico base station PDSCH on same resource elements. However, the CRSs transmitted from the pico base station 21 are still heavily interfered by macro base station PDSCH transmission.

In accordance with embodiments of the invention, only those resource elements of the pico cell CRS that are within the own scheduled bandwidth for the user equipment 40 in the pico cell 20 are used for channel estimation. In the illustrated case, this would be carrier f1. Thereby the user equipment 40 is able to obtain an accurate channel estimation based on the CRSs received.

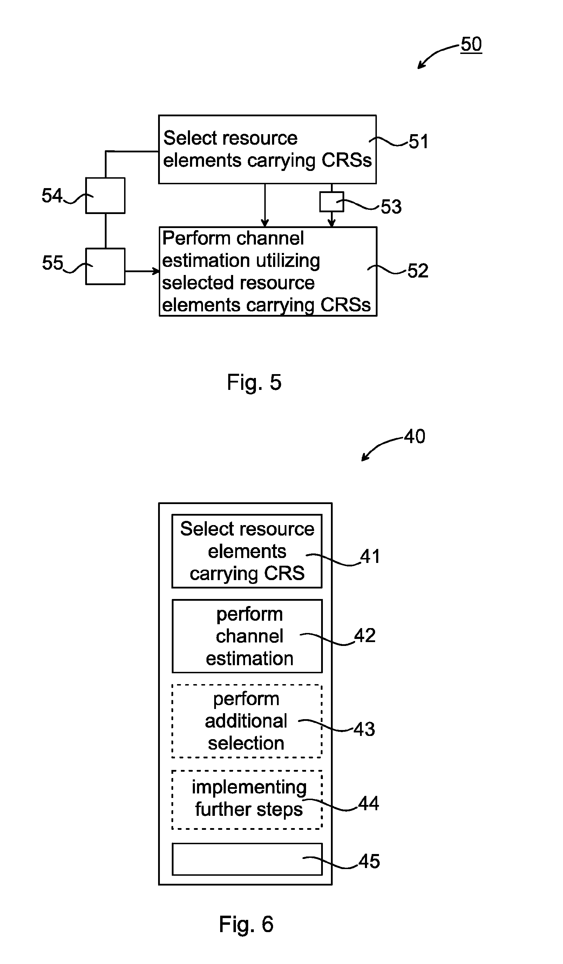

With reference to figure 5, steps of a method 50 in accordance with particular embodiments of the invention are illustrated. The method 50 is implemented in the user equipment 40 and used for obtaining reliable channel estimation. The user equipment 40 is communicating within the wireless communication system 1 as described, wherein the cells of the layered structure signal at least partly on overlapping bandwidth. In this situation, embodiments of the invention provide an improved way of obtaining a reliable channel estimation based on CRSs, in that not all available CRSs are used, but instead a selection is performed. The method 50 thus comprises the first step 51 of selecting, from among resource blocks scheduled for the user equipment 40 that is connected to the underlaid cell 20, 30, resource elements carrying cell specific reference symbols CRS1, CRS2, CRS3, CRS4, CRS5, CRS6. The resource blocks are within bandwidth f1, f2 used by the underlaid cell 20, 30. The user equipment 40 may obtain position of the CRSs that should be used for channel estimation from the base station 21, 31.

The method 50 comprises the second step of performing 52 the channel estimation by utilizing only the selected resource elements carrying cell specific reference symbols CRS1, CRS2, CRS3, CRS4, CRS5, CRS6.

Only resource elements carrying CRSs that are not interfered by macro base station transmissions are selected for use.

In an embodiment, the step of selecting 51 comprises the sub-step of the user equipment 40 estimating an interference level of the resource blocks RBs containing CRS, the RBs on f1 and potentially on f2 and basing the selection thereon. As can be seen from figure 4, f1 is heavily interfered by transmissions from the macro base station 11, and reliable control information can therefore not be sent on f1 in the first and second pico cells 20, 30. In an embodiment of the invention, the step of selecting 51 therefore comprises the sub-step of rejecting resource elements carrying cell specific reference symbols CRS1, CRS2, CRS3, CRS4, CRS5, CRS6 that overlap with resource blocks used for control signalling by the base station 11 of the overlaid cell 10.

In another embodiment, the step of selecting 51 therefore comprises the sub-step 53 of additionally selecting resource elements from among bandwidth f1, f2 not used by the overlaid cell.

There may be resource elements carrying CRSs that are neither scheduled by the pico base station 21, nor by the macro base station 11 and the resource blocks comprising such resource elements carrying CRSs are thus accessible for use for selection. In an embodiment of the invention, also such resource elements carrying CRSs are used. In particular, the step of selecting 51 then comprises the sub-steps of:
- detecting 54 that no overlaid cell 10 users are scheduled in accessible resource blocks, and
- additionally selecting 55 resource elements carrying cell specific reference symbols from among the detected accessible resource blocks.

Even further improved channel estimation is then obtained in that the channel estimation is based on additional non-interfered CRSs.

In the above embodiment, the sub-step of detecting 54 could be done in any suitable manner. For example, the user equipment 40 may for this end determine interference levels from the accessible resource blocks by means of energy detection. It is noted that other known interference measurements could alternatively be used.

The base station could explicitly signal to the user equipment 40 which resource elements carrying the CRSs that should be used for channel estimation. In yet another embodiment of the method 50, the step of selecting 51 therefore comprises the user equipment 40 obtaining signaling from the base station 21. The signaling indicates which resource elements carrying cell specific reference symbols that should be used for the channel estimation.

In an alternative embodiment, the signaling from the base station indicates which resource elements carrying cell specific reference symbols should not be used by the user equipment 40 in the channel estimation.

The signaling can be done dynamically by including the required information in the assignment, which is reliably transmitted on the other carrier bandwidth f2, i.e. nonoverlapping bandwidth, or be configured. The latter approach is useful if carrier bandwidth f1 is rather statically partitioned into frequency regions that are exclusively used by either macro or pico base stations. The user equipment 40 is then configured to know which resource elements carrying CRSs to use for the channel estimation. Alternatively, the user equipment 40 is informed of the bandwidth portion assigned to pico base station 21 or the bandwidth portion assigned to macro base station 11 and derives the usable CRS resource elements.

In a particular embodiment, the resource blocks scheduled for the user equipment 40 in the underlaid cell comprises its own scheduled PDSCH bandwidth.

With reference now to figure 6, the invention also encompasses a user equipment 40, in which the above method may be implemented by including suitable processing circuitry.

In particular, the user equipment 40 is suitable for communication within the wireless communication system 1 as described and comprises one or more processing circuits 41 configured to select, from among resource blocks scheduled for the user equipment 40 in the underlaid cell 20, 30, resource elements carrying cell specific reference symbols, wherein the resource blocks are comprised in bandwidth f1, f2 used by the underlaid cell 20, 30. The user equipment 40 further comprises one or more processing circuits 42 configured to perform the channel estimation by utilizing the selected resource elements carrying cell specific reference symbols.

The user equipment 40 may further comprise one or more processing circuits 43 configured to perform an additional selection of resource elements carrying cell specific reference symbols from among sub-carriers not used by the overlaid cell.

Yet additional processing circuits, generally indicated at reference numeral 44, may be included in the user equipment for performing one or more of the steps in the above described embodiments of the method 50, i.e. for implementing further, optional steps of the method 50.

In particular, processing circuitry may be provided for estimating an interference level of the resource blocks and basing the selection thereon.

Processing circuitry may be provided for rejecting resource elements carrying cell specific reference symbols CRS1, CRS2, CRS3, CRS4, CRS5, CRS6 that overlaps with resource elements used for control signalling by the base station 11 of the overlaid cell 10.

Processing circuitry may be provided for additionally selecting resource elements from among bandwidth f1, f2 not used by the overlaid cell.

Processing circuitry may be provided for detecting that no overlaid cell 10 users are scheduled in accessible resource blocks, and additionally selecting resource elements carrying cell specific reference symbols from among the detected accessible resource blocks. Such processing circuitry could comprise interference determining means.

Processing circuitry may be provided for receiving and processing signals from the base station explicitly stating which resource elements carrying the CRSs that should be used for channel estimation. Alternatively, processing circuitry may be provided for receiving and processing signals from the base station explicitly stating which resource elements carrying the CRSs that should not be used for channel estimation.

The processing circuitry 41, 42, 43, 44 described above can be implemented as program modules of a computer program comprising code means, which when run by a processor 45 in the user equipment 40 causes the user equipment 40 to perform the above-described functions and actions. The processor 45 need not be a single CPU (Central processing unit), but could comprise two or more processing units in the user equipment 40. For example, the processor may include general purpose microprocessors, instruction set processors and/or related chips sets and/or special purpose microprocessors such as ASICs (Application Specific Integrated Circuit). The processor 45 may also comprise board memory for caching purposes. The computer program may be carried by a computer program product in the user equipment 40 comprising the processor 45. The computer program product comprises a computer readable medium on which the computer program is stored. For example, the computer program product may be a flash memory, a RAM (Random-Access Memory), ROM (Read-Only Memory) or an EEPROM (electrically erasable Programmable ROM) and the computer program modules described above could in alternative embodiments be distributed on different computer program products in the form of memories within the user equipment 40.

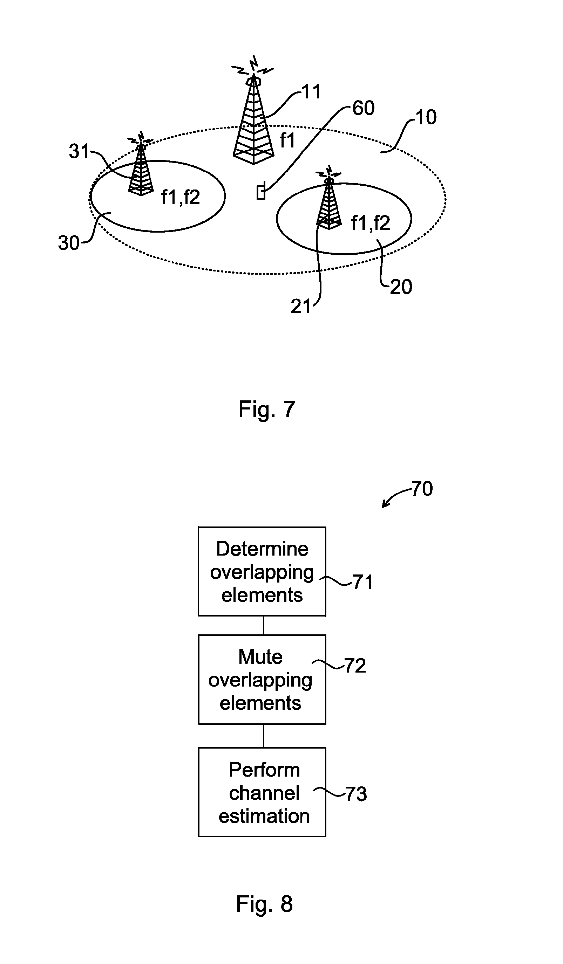

In the above description, the user equipment 40 is communicating with an underlaid cell base station, for example pico cell base station 21, 31 and is interfered by transmissions from overlaid cell base station, for example macro base station 11. In another scenario, illustrated in figure 7, a user equipment 60 is instead communicating with an overlaid cell base station 11, the overlaid cell base station 11 being an aggressor base station. Regarding terminology, it is noted that an aggressor base station is a base station creating considerable interference to another base station, the other base station then being a victim base station ("victim" of interference).

An alternative embodiment is then, for the above scenario, that PDSCH transmitted from the overlaid cell base station 11 (aggressor base station) mutes PDSCH resource elements that overlap with CRS resource elements from the first and second underlaid cell base stations 21, 31, these base stations being victim base stations. The overlaid cell base station 11 PDSCH resource elements transmitted from any antenna that overlap with any underlaid cell base station CRS resource elements from any antenna is to be muted. PDSCH decoding without knowledge of this muting is possible but with lower performance. A typical decoder calculates soft values for bits modulated onto a resource element. If a resource element is muted, only interference and noise is present on this resource element and the calculated soft values do not represent the likelihood of bits modulated on this resource element.

In order to optimize PDSCH decoding of user equipments connected to the overlaid base station 11, the position of muted PDSCH resource elements is signaled to the user equipment 60. The decoder of the user equipment 60 then sets the soft values of the bits modulated on muted resource elements to zero. The required information is CRS frequency shift applied in the under laid cell base station and number of transmit antennas used in the under laid cell base station.

This embodiment thus provides a method in a user equipment 60 for channel estimation, wherein the user equipment 60 communicates within a wireless communication system 1 comprising at least two cells 10, 20, 30 arranged in a layered structure. The cells 10, 20, 30 comprise base stations 11, 21, 31 signaling at least partly on overlapping bandwidth f1, f2, and the user equipment 60 communicates with a base station 11 of an overlaid cell 10 of the layered structure.

With reference to figure 8, the method 70 comprises the first step of determining 71 PDSCH resource elements that overlap with resource elements carrying cell specific reference symbols transmitted from the underlaid cells 20, 30. The method 70 comprises the second step of muting 72 the PDSCH resource elements that overlap with the underlaid cell base station transmissions as determined in the first step. The method 70 comprises the third step of performing 73 channel estimation by utilizing the obtained information. In particular, as the user equipment 70 has knowledge about which resource elements are muted, the decoder of the user equipment may set soft values of bits modulated on muted resource elements to zero, which thus is an example on how to utilize the obtained information.

In another embodiment, the overlaid base station 11 does not mute the resource elements but takes them as empty resource elements into account when performing a rate matching step. In this case PDSCH is not mapped onto those resource elements. For this embodiment to function properly, it is of importance that the user equipment 40 is aware that PDSCH is not transmitted on certain resource elements, otherwise decoding would fail.

It is noted that although the invention has been described in connection with LTE advanced system, the invention can be applied to any cellular system using pilot symbols. As a few examples of such cellular systems 802.16e and 802.16m of the IEEE 802.16 standard can be mentioned.

## Claims

1. A method (50) in a user equipment (40) for channel estimation, said user equipment (40) communicating within a wireless communication system (1) comprising at least two cells (10; 20, 30) arranged in a layered structure, wherein said two cells (10; 20, 30) comprise an underlaid cell (20, 30) and an overlaid cell (10), said at least two cells (10; 20, 30) using bandwidths (f1, f2) at least partly overlapping each other, and said user equipment (40) communicating with a base station (21, 31) of the underlaid cell (20, 30) of said layered structure, said method comprising the steps of:
- selecting (51), from among resource blocks (RBs) scheduled for said user equipment (40) in said underlaid cell (20, 30), resource elements carrying cell specific reference symbols (CRS1, CRS2, CRS3, CRS4, CRS5, CRS6), wherein said resource blocks (RBs) are within the bandwidth used by said underlaid cell (20, 30), and
- performing (52) said channel estimation by utilizing said selected resource elements carrying cell specific reference symbols (CRS1, CRS2, CRS3, CRS4, CRS5, CRS6)
, wherein said step of selecting (51) comprises the sub-step of rejecting resource elements carrying cell specific reference symbols (CRS1, CRS2, CRS3, CRS4, CRS5, CRS6) overlapping with resource elements used for control signalling by a base station (11) of said overlaid cell (10).

2. The method as claimed in claim 1, wherein said step of selecting (51) comprises the sub-step of said user equipment (40) estimating an interference level of resource blocks (RBs) from said bandwidth used by said underlaid cell (20, 30) and basing said selection thereon.

3. The method (50) as claimed in claim 1 or 2, wherein said step of selecting (51) comprises the sub-step (53) of additionally selecting resource elements (CRS1, CRS2, CRS3, CRS4, CRS5, CRS6) from among bandwidth regions not used by said overlaid cell (10).

4. The method as claimed in any of the preceding claims, wherein said step of selecting (51) comprises the sub-steps of:
- detecting (54) that no overlaid cell (10) users are scheduled in accessible resource blocks, which accessible resource blocks comprise resource elements carrying cell specific reference symbols that are neither scheduled by the base station (21, 31) of the underlaid cell (20, 30) nor by the base station (11) of the overlaid cell (10), and
- additionally selecting (55) resource elements carrying cell specific reference symbols (CRS1, CRS2, CRS3, CRS4, CRS5, CRS6) from among said accessible resource blocks.

5. The method as claimed in claim 4, wherein said sub-step of detecting (54) comprises said user equipment (40) determining interference from said accessible resource blocks by means of energy detection.

6. The method (50) as claimed in claim 1, wherein said step of selecting (51) comprises said user equipment (40) obtaining signaling from said base station (21, 31) of said underlaid cell (20, 30) , said signaling indicating which resource elements carrying cell specific reference symbols (CRS1, CRS2, CRS3, CRS4, CRS5, CRS6) should be used for said channel estimation or said signaling indicating which resource elements carrying cell specific reference symbols (CRS1, CRS2, CRS3, CRS4, CRS5, CRS6) should not be used for said channel estimation.

7. The method as claimed in any of the preceding claims, wherein said step of selecting (51) comprises selecting resource elements carrying cell specific reference symbols (CRS1, CRS2, CRS3, CRS4, CRS5, CRS6) from a bandwidth region used by the underlaid cell (20, 30), which bandwidth region used by the underlaid cell (20, 30) is not overlapping the bandwidth used by the overlaid cell (10).

8. The method (50) as claimed in any of the preceding claims, wherein said resource blocks (RBs) scheduled for said user equipment (40) in said underlaid cell (20, 30) comprise Physical Downlink Shared Channel, PDSCH, bandwidth.

9. A user equipment (40) for communication within a wireless communication system (1) comprising at least two cells (10; 20, 30) arranged in a layered structure, wherein said two cells (10; 20, 30) comprise an underlaid cell (20, 30) and an overlaid cell (10), said at least two cells (10; 20, 30) using bandwidths (f1, f2) at least partly overlapping each other, and said user equipment (40) communicating with a base station (21, 31) of the underlaid cell (20, 30) of said layered structure, said user equipment (40) comprising:
- one or more processing circuits (41) configured to select, from among resource blocks (RBs) scheduled for said user equipment (40) in said underlaid cell (20, 30), resource elements carrying cell specific reference symbols (CRS1, CRS2, CRS3, CRS4, CRS5, CRS6), wherein said resource block (RBs) are within the bandwidth used by said underlaid cell (20, 30), and
- one or more processing circuits (42) configured to perform said channel estimation by utilizing said selected resource elements carrying cell specific reference symbols (CRS1, CRS2, CRS3, CRS4, CRS5, CRS6)
, wherein the one or more processing circuits (41) configured to select said resource elements are further configured to reject resource elements carrying cell specific reference symbols (CRS1, CRS2, CRS3, CRS4, CRS5, CRS6) overlapping with resource elements used for control signalling by a base station (11) of said overlaid cell (10).

10. The user equipment (40) as claimed in claim 9, further comprising one or more processing circuits (43) configured to perform an additional selection of resource elements carrying cell specific reference symbols (CRS1, CRS2, CRS3, CRS4, CRS5, CRS6) from among bandwidth regions not used by said overlaid cell (10).

## Patentansprüche

1. Verfahren (50) in einer Benutzereinrichtung (40) zur Kanalschätzung, wobei die Benutzereinrichtung (40) innerhalb eines drahtlosen Kommunikationssystems (1) kommuniziert, das mindestens zwei Zellen (10; 20, 30) umfasst, die in einer geschichteten Struktur angeordnet sind, worin die zwei Zellen (10; 20, 30) eine unterlagerte Zelle (20, 30) und eine überlagerte Zelle (10) umfassen, wobei die mindestens zwei Zellen (10; 20, 30) Bandbreiten (f1, f2) verwenden, die einander zumindest teilweise überschneiden, und wobei die Benutzereinrichtung (40) mit einer Basisstation (21, 31) der unterlagerten Zelle (20, 30) der geschichteten Struktur kommuniziert, wobei das Verfahren die Schritte umfasst:
- aus für die Benutzereinrichtung (40) in der unterlagerten Zelle (20, 30) eingeplanten Ressourcenblöcken (RBs) erfolgendes Auswählen (51) von Ressourcenelementen, die zellenspezifische Bezugssymbole (CRS1, CRS2, CRS3, CRS4, CRS5, CRS6) tragen, worin die Ressourcenblöcke (RBs) innerhalb der durch die unterlagerte Zelle (20, 30) verwendeten Bandbreite sind, und
- Durchführen (52) der Kanalschätzung durch Nutzen der ausgewählten Ressourcenelemente, die zellenspezifische Bezugssymbole (CRS1, CRS2, CRS3, CRS4, CRS5, CRS6) tragen,
worin der Schritt des Auswählens (51) den Teilschritt umfasst: Ablehnen von Ressourcenelementen, die zellenspezifische Bezugssymbole (CRS1, CRS2, CRS3, CRS4, CRS5, CRS6) tragen, die sich mit Ressourcenelementen überschneiden, die zur Steuerungssignalisierung durch eine Basisstation (11) der überlagerten Zelle (10) verwendet werden.

2. Verfahren nach Anspruch 1, worin der Schritt des Auswählens (51) den Teilschritt umfasst: durch die Benutzereinrichtung (40) erfolgendes Schätzen eines Störpegels von Ressourcenblöcken (RBs) aus der durch die unterlagerte Zelle (20, 30) verwendeten Bandbreite und Basieren der Auswahl darauf.

3. Verfahren (50) nach Anspruch 1 oder 2, worin der Schritt des Auswählens (51) den Teilschritt (53) umfasst: zusätzliches Auswählen von Ressourcenelementen (CRS1, CRS2, CRS3, CRS4, CRS5, CRS6) aus Bandbreitenbereichen, die nicht durch die überlagerte Zelle (10) verwendet werden.

4. Verfahren nach einem der vorhergehenden Ansprüche, worin der Schritt des Auswählens (51) die Teilschritte umfasst:
- Ermitteln (54), dass keine Benutzer der überlagerten Zelle (10) in zugänglichen Ressourcenblöcken eingeplant sind, wobei diese zugänglichen Ressourcenblöcke Ressourcenelemente umfassen, die zellenspezifische Bezugssymbole tragen, die weder durch die Basisstation (21, 31) der unterlagerten Zelle (20, 30) noch durch die Basisstation (11) der überlagerten Zelle (10) eingeplant sind, und
- zusätzliches Auswählen (55) von Ressourcenelementen, die zellenspezifische Bezugssymbole (CRS1, CRS2, CRS3, CRS4, CRS5, CRS6) tragen, aus den zugänglichen Ressourcenblöcken.

5. Verfahren nach Anspruch 4, worin der Schritt des Ermittelns (54) umfasst: Bestimmen von Störung aus den zugänglichen Ressourcenblöcken durch die Benutzereinrichtung (40) mittels Energieermittlung.

6. Verfahren (50) nach Anspruch 1, worin der Schritt des Auswählens (51) umfasst: durch die Benutzereinrichtung (40) erfolgendes Erlangen von Signalisierung von der Basisstation (21, 31) der unterlagerten Zelle (20, 30), wobei die Signalisierung angibt, welche Ressourcenelemente, die zellenspezifische Bezugssymbole (CRS1, CRS2, CRS3, CRS4, CRS5, CRS6) tragen, für die Kanalschätzung verwendet werden sollen, oder wobei die Signalisierung angibt, welche Ressourcenelemente, die zellenspezifische Bezugssymbole (CRS1, CRS2, CRS3, CRS4, CRS5, CRS6) tragen, nicht für die Kanalschätzung verwendet werden sollen.

7. Verfahren nach einem der vorhergehenden Ansprüche, worin der Schritt des Auswählens (51) umfasst: Auswählen von Ressourcenelementen, die zellenspezifische Bezugssymbole (CRS1, CRS2, CRS3, CRS4, CRS5, CRS6) tragen, aus einem durch die unterlagerte Zelle (20, 30) verwendeten Bandbreitenbereich, wobei dieser durch die unterlagerte Zelle (20, 30) verwendete Bandbreitenbereich sich nicht mit der durch die überlagerte Zelle (10) verwendeten Bandbreite überschneidet.

8. Verfahren (50) nach einem der vorhergehenden Ansprüche, worin die für die Benutzereinrichtung (40) in der unterlagerten Zelle (20, 30) eingeplanten Ressourcenblöcke (RBs) Bandbreite des physischen gemeinsam genutzten Abwärtsstreckenkanals, PDSCH, umfassen.

9. Benutzereinrichtung (40) zur Kommunikation innerhalb eines drahtlosen Kommunikationssystems (1) das mindestens zwei Zellen (10; 20, 30) umfasst, die in einer geschichteten Struktur angeordnet sind, worin die zwei Zellen (10; 20, 30) eine unterlagerte Zelle (20, 30) und eine überlagerte Zelle (10) umfassen, wobei die mindestens zwei Zellen (10; 20, 30) Bandbreiten (f1, f2) verwenden, die einander zumindest teilweise überschneiden, und wobei die Benutzereinrichtung (40) mit einer Basisstation (21, 31) der unterlagerten Zelle (20, 30) der geschichteten Struktur kommuniziert, wobei die Benutzereinrichtung (40) umfasst:
- eine oder mehrere Verarbeitungsschaltungen (41), die dafür konfiguriert sind, aus für die Benutzereinrichtung (40) in der unterlagerten Zelle (20, 30) eingeplanten Ressourcenblöcken (RBs) Ressourcenelemente auszuwählen, die zellenspezifische Bezugssymbole (CRS1, CRS2, CRS3, CRS4, CRS5, CRS6) tragen, worin die Ressourcenblöcke (RBs) innerhalb der durch die unterlagerte Zelle (20, 30) verwendeten Bandbreite sind, und
- eine oder mehrere Verarbeitungsschaltungen (41), die dafür konfiguriert sind, die Kanalschätzung durch Nutzen der ausgewählten Ressourcenelemente, die zellenspezifische Bezugssymbole (CRS1, CRS2, CRS3, CRS4, CRS5, CRS6) tragen, durchzuführen,
worin die eine oder die mehreren Verarbeitungsschaltungen (41), die dafür konfiguriert sind, die Ressourcenelemente auszuwählen, ferner dafür konfiguriert sind, Ressourcenelemente abzulehnen, die zellenspezifische Bezugssymbole (CRS1, CRS2, CRS3, CRS4, CRS5, CRS6) tragen, die sich mit Ressourcenelementen überschneiden, die zur Steuerungssignalisierung durch eine Basisstation (11) der überlagerten Zelle (10) verwendet werden.

10. Benutzereinrichtung (40) nach Anspruch 9, ferner eine oder mehrere Verarbeitungsschaltungen (43) umfassend, die dafür konfiguriert sind, eine zusätzliche Auswahl von Ressourcenelementen, die zellenspezifische Bezugssymbole (CRS1, CRS2, CRS3, CRS4, CRS5, CRS6) tragen, aus Bandbreitenbereichen, die nicht durch die überlagerte Zelle (10) verwendet werden, durchzuführen.

## Revendications

1. Procédé (50), mis en oeuvre dans un équipement d'utilisateur (40), d'estimation de canal, ledit équipement d'utilisateur (40) communiquant au sein d'un système de communication sans fil (1) comprenant au moins deux cellules (10 ; 20, 30) agencées dans une structure superposée, dans lequel lesdites deux cellules (10 ; 20, 30) comportent une cellule sous-jacente (20, 30) et une cellule recouverte (10), lesdites au moins deux cellules (10 ; 20, 30) utilisant des bandes passantes (f1, f2) se chevauchant mutuellement au moins partiellement, et ledit équipement d'utilisateur (40) communiquant avec une station de base (21, 31) de la cellule sous-jacente (20, 30) de ladite structure superposée, ledit procédé comprenant les étapes ci-dessous consistant à :
- sélectionner (51), parmi des blocs de ressources (RBs) planifiés pour ledit équipement d'utilisateur (40) dans ladite cellule sous-jacente (20, 30), des éléments de ressources transportant des symboles de référence spécifiques de cellules (CRS1, CRS2, CRS3, CRS4, CRS5, CRS6), dans lequel lesdits blocs de ressources (RBs) se situent dans la bande passante utilisée par ladite cellule sous-jacente (20, 30) ; et
- mettre en oeuvre (52) ladite estimation de canal en utilisant lesdits éléments de ressources sélectionnés transportant des symboles de référence spécifiques de cellules (CRS1, CRS2, CRS3, CRS4, CRS5, CRS6),
dans lequel ladite étape de sélection (51) comprend la sous-étape consistant à rejeter des éléments de ressources transportant des symboles de référence spécifiques de cellules (CRS1, CRS2, CRS3, CRS4, CRS5, CRS6) en chevauchement avec des éléments de ressources utilisés, en vue d'une signalisation de commande par une station de base (11) de ladite cellule recouverte (10).

2. Procédé selon la revendication 1, dans lequel ladite étape de sélection (51) comprend la sous-étape dans laquelle ledit équipement d'utilisateur (40) estime un niveau de brouillage de blocs de ressources (RBs) à partir de ladite bande passante utilisée par ladite cellule sous-jacente (20, 30), et il base ladite sélection sur celui-ci.

3. Procédé (50) selon la revendication 1 ou 2, dans lequel ladite étape de sélection (51) comprend la sous-étape (53) consistant à sélectionner en outre des éléments de ressources (CRS1, CRS2, CRS3, CRS4, CRS5, CRS6) parmi des zones de bande passante non utilisées par ladite cellule recouverte (10).

4. Procédé selon l'une quelconque des revendications précédentes, dans lequel ladite étape de sélection (51) comprend les sous-étapes ci-dessous consistant à :
- détecter (54) qu'aucun utilisateur de cellule recouverte (10) n'est planifié dans des blocs de ressources accessibles, lesquels blocs de ressources accessibles comportent des éléments de ressources transportant des symboles de référence spécifiques de cellules qui ne sont ni planifiés par la station de base (21, 31) de la cellule sous-jacente (20, 30), ni planifiés par la station de base (11) de la cellule recouverte (10) ; et
- sélectionner en outre (55) des éléments de ressources transportant des symboles de référence spécifiques de cellules (CRS1, CRS2, CRS3, CRS4, CRS5, CRS6) parmi lesdits blocs de ressources accessibles.

5. Procédé selon la revendication 4, dans lequel ladite sous-étape de détection (54) comprend l'étape dans laquelle ledit équipement d'utilisateur (40) détermine un brouillage en provenance desdits blocs de ressources accessibles au moyen d'une détection d'énergie.

6. Procédé (50) selon la revendication 1, dans lequel ladite étape de sélection (51) comprend l'étape dans laquelle ledit équipement d'utilisateur (40) obtient une signalisation à partir de ladite station de base (21, 31) de ladite cellule sous-jacente (20, 30), ladite signalisation indiquant quels éléments de ressources transportant des symboles de référence spécifiques de cellules (CRS1, CRS2, CRS3, CRS4, CRS5, CRS6) devraient être utilisés pour ladite estimation de canal, ou ladite signalisation indiquant quels éléments de ressources transportant des symboles de référence spécifiques de cellules (CRS1, CRS2, CRS3, CRS4, CRS5, CRS6) ne devraient pas être utilisés pour ladite estimation de canal.

7. Procédé selon l'une quelconque des revendications précédentes, dans lequel ladite étape de sélection (51) consiste à sélectionner des éléments de ressources transportant des symboles de référence spécifiques de cellules (CRS1, CRS2, CRS3, CRS4, CRS5, CRS6) à partir d'une zone de bande passante utilisée par la cellule sous-jacente (20, 30), laquelle zone de bande passante utilisée par la cellule sous-jacente (20, 30) ne chevauche pas la bande passante utilisée par la cellule recouverte (10).

8. Procédé (50) selon l'une quelconque des revendications précédentes, dans lequel lesdits blocs de ressources (RBs) planifiés pour ledit équipement d'utilisateur (40) dans ladite cellule sous-jacente (20, 30) comportent une bande passante de canal partagé en liaison descendante physique, PDSCH.

9. Équipement d'utilisateur (40) pour une communication au sein d'un système de communication sans fil (1) comprenant au moins deux cellules (10 ; 20, 30) agencées dans une structure superposée, dans lequel lesdites deux cellules (10 ; 20, 30) comportent une cellule sous-jacente (20, 30) et une cellule recouverte (10), lesdites au moins deux cellules (10 ; 20, 30) utilisant des bandes passantes (f1 f2) se chevauchant mutuellement au moins partiellement, et ledit équipement d'utilisateur (40) communiquant avec une station de base (21, 31) de la cellule sous-jacente (20, 30) de ladite structure superposée, ledit équipement d'utilisateur (40) comportant :
- un ou plusieurs circuits de traitement (41) configurés de manière à sélectionner, parmi des blocs de ressources (RBs) planifiés pour ledit équipement d'utilisateur (40) dans ladite cellule sous-jacente (20, 30), des éléments de ressources transportant des symboles de référence spécifiques de cellules (CRS1, CRS2, CRS3, CRS4, CRS5, CRS6), dans lequel lesdits blocs de ressources (RBs) se situent dans la bande passante utilisée par ladite cellule sous-jacente (20, 30) ; et
- un ou plusieurs circuits de traitement (42) configurés de manière à mettre en oeuvre ladite estimation de canal en utilisant lesdits éléments de ressources sélectionnés transportant des symboles de référence spécifiques de cellules (CRS1, CRS2, CRS3, CRS4, CRS5, CRS6),
dans lequel ledit un ou lesdits plusieurs circuits de traitement (41) configurés de manière à sélectionner lesdits éléments de ressources sont en outre configurés de manière à rejeter des éléments de ressources transportant des symboles de référence spécifiques de cellules (CRS1, CRS2, CRS3, CRS4, CRS5, CRS6) en chevauchement avec des éléments de ressources utilisés en vue d'une signalisation de commande par une station de base (11) de ladite cellule recouverte (10).

10. Équipement d'utilisateur (40) selon la revendication 9, comprenant en outre un ou plusieurs circuits de traitement (43) configurés de manière à mettre en oeuvre une sélection supplémentaire d'éléments de ressources transportant des symboles de référence spécifiques de cellules (CRS1, CRS2, CRS3, CRS4, CRS5, CRS6) parmi des zones de bande passante non utilisées par ladite cellule recouverte (10).
